(19) Europäisches Patentamt

European Patent Office

Office européen des brevets

(11) Veröffentlichungsnummer: **0 262 385**

**A2**

(12) # EUROPÄISCHE PATENTANMELDUNG

(21) Anmeldenummer: 87112288.3

(22) Anmeldetag: 25.08.87

(51) Int. Cl.⁴: **C09D 3/14** , C09D 3/81 , C09K 3/16 , C08J 7/04

(30) Priorität: 03.09.86 DE 3629930

(43) Veröffentlichungstag der Anmeldung: 06.04.88 Patentblatt 88/14

(84) Benannte Vertragsstaaten: DE FR GB IT NL

(71) Anmelder: HOECHST AKTIENGESELLSCHAFT Postfach 80 03 20 D-6230 Frankfurt am Main 80(DE)

(72) Erfinder: Thoese, Klaus, Dr. Dipl.-Chem. Erbsenacker 15 D-6200 Wiesbaden(DE) Erfinder: Jung, Karl-Heinz Schiersteiner Strasse 28 D-6200 Wiesbaden(DE)

(54) Antistatischer Überzug für Polyesteroberflächen.

(57) Die Erfindung betrifft einen antistatischen Überzug für Polyesteroberflächen, bestehend aus einer Mischung im wesentlichen aus

a) Celluloseestern oder aus Poly(meth)acrylaten bzw. deren Mischpolymerisaten und aus

b) wenigstens einem Antistatikum, wobei der Überzug als Zusatz eine mit der Mischung verträgliche Komponente aus der Gruppe der Weichmacher, der Vinylpolymeren oder der Polyester enthält. Das Gewichtsverhältnis von Antistatikum zu Zusatz liegt im Bereich von etwa 1:1 bis 1:15, vorzugsweise von etwa 1:2 bis 1:6.

Durch die Kombination werden Überzüge mit guter antistatischer Wirkung erzielt.

EP 0 262 385 A2

## Antistatischer Überzug für Polyesteroberflächen

Die Erfindung betrifft einen antistatischen Überzug für Polyesteroberflächen, bestehend aus einer Mischung im wesentlichen aus
a) Cellulosestern oder Poly(meth)acrylaten bzw. deren Mischpolymerisaten und aus
b) wenigstens einem Antistatikum.

Kunststoffe, insbesondere solche aus Polyestern, haben neben ihrem hohen Gebrauchswert für viele Anwendungen den Nachteil, daß sie sich elektrostatisch unerwünscht stark aufladen. Es ist bekannt, den Kunststoffen zur Verhinderung dieser Eigenschaft ein Antistatikum in Masse zuzufügen oder sie mit einer dünnen Oberflächenschicht aus einem Antistatikum zu versehen. Bei den Kunststoffen nach der ersten Art ist entweder der erreichbare antistatische Effekt gering oder aber, insbesondere bei grösserem Zusatz von Antistatikum, verschlechtern sich deutlich ihre mechanischen Eigenschaften. Das Auftragen einer Schicht auf der Oberfläche führt zu besseren antistatischen Effekten. Die verwendeten Antistatika sind meistens in Wasser lösliche niedermolekulare oder polymere Produkte. Hierdurch sind der Beständigkeit der aufgebrachten Schicht gegen Feuchtigkeit Grenzen gesetzt. Außerdem lassen sich diese Schichten mechanisch leicht abreiben und ihre Wirkung geht dadurch verloren.

Kombiniert man dagegen in der aufzubringenden Schicht herkömmliche Antistatika mit Bindemitteln, so erhält man gegen mechanische Einwirkung beständigere Schichten mit antistatischer Wirkung.

Bei einer Reihe von Bindemitteln läßt sich durch Zusatz von Antistatikum nur dann eine hohe elektrostatische Aufladbarkeit verhindern, wenn man so große Mengen zugibt, daß sich die mechanische Stabilität der Schichten verschlechtert und die Überzüge gegen Wasser wieder empfindlich werden.

Kunststoffe, die schon mit relativ geringen Mengen an Antistatikum einen erniedrigten Oberflächenwiderstand ergeben, sind zum Beispiel Polyolefine.

Neben Polyolefinen sind oft auch hydrophile Kunststoffe, wie etwa Polyvinylalkohol oder Gelatine relativ einfach durch Zugabe von zum Beispiel Alkylarylpolyglykolethern antistatisch auszurüsten.

Ester der Cellulose mit Carbonsäuren, Polyacrylate, Polymethacrylate und Mischpolymersiate, die hauptsächlich aus Acrylsäureestern oder Methacrylsäureestern bestehen, erfordern dagegen große Zusätze an Antistatikum und können daher als Bindemittel für antistatische Überzüge mit hohen Qualitätsansprüchen nicht eingesetzt werden, obwohl dies wünschenswert wäre, da einerseits die Celluloseester besonders vergilbungsbeständige und nicht erweichende Bindemittel darstellen und andererseits Polyacrylate besonders haftfeste Überzüge auf vielen Unterlagen ergeben.

Es hat nicht an Versuchen gefehlt antistatische Überzüge aus Mischungen von Polyacrylaten und Antistatika zu schaffen (EP-B-0 027 699, EP-B-0 013 556 entsprechend US-PS 4,214,035 und DE-A-29 50 287 entsprechend US-PS 4225665). Man stellt generell antistatische Schichten aus Acrylat-Dispersionen her, die, weil aus wäßriger Dispersion aufgetragen, leichter antistatisch auszurüsten sind, aber zu ihrer Verfestigung auch vernetzt werden müssen. Das Auftragen der Schichten kann bereits bei der Herstellung der Schichtträger, z.B. bei der Herstellung der Polyesterfolie zwischen den Streckvorgängen erfolgen.

Es ist auch bekannt (DE-A-1 619 201) zur antistatischen Ausrüstung von Folien und Kunstleder aus Polyvinylchlorid in dünner Schicht eine Decklösung aufzubringen, die an sich bekannte antistatisch wirkende hydrophile, niedermolekulare organische Substanzen in hoher Konzentration und Bindemittel gelöst enthält.

Die Anwendung einer solchen Decklösung ist jedoch auf Materialien aus Polyvinylchlorid beschränkt auf denen Haftungsprobleme weniger auftreten.

Es war Aufgabe der Erfindung, Polyesteroberflächen mit antistatisch wirkenden Celluloseester oder Poly(meth)acrylate enthaltenden Überzügen zu versehen, die gegen mechanische Einflüße besonders beständig sind.

Diese Aufgabe wird durch einen Überzug der eingangs genannten Art dadurch gelöst, daß der Überzug als Zusatz eine mit der Mischung verträgliche Komponente aus der Gruppe der Weichmacher, der Vinylpolymeren oder der Polyester enthält, wobei das Gewichtsverhältnis von Antistatikum zu Zusatz im Bereich von etwa 1:1 bis 1:15, vorzugsweise im Bereich von 1:2 bis 1: 6 liegt. Weichmacher auf Basis von Pentaerythritol, von Adipinsäure und Butandiol, Homo-oder Mischpolymerisaten des Vinylacetats als Vinylpolymer oder Polyesterharze werden als Zusatz bevorzugt.

Es wurde gefunden, daß sich Bindemittel wie Celluloseester oder Poly(meth)acrylate bzw. deren Mischpolymerisate, die man mit üblichen kleinen Zusätzen an Antistatikum nicht zu Schichten mit geringer elektrostatischer Aufladung verarbeiten kann, durch Kombination mit einer zweiten, zusätzlichen Komponente, wie z.B. einem Weichmacher oder einem Vinylpolymeren bzw. Polyesterharz in antistatisch ausgerüstete Bindemittel umwandeln lassen.

Es wurde grundsätzlich erkannt, daß in diesen Fällen sogar die Menge an Antistatikum verringert werden kann, die ohne den Zusatz ursprünglich notwendig war.

Voraussetzung für das Erzeugen des erfindungsgemäßen Überzugs ist eine gute Verträglichkeit des Zusatzes mit dem Bindemittel und dem Antistatikum. Damit etwa optisch klare Überzüge entstehen, muß eine gute Verträglichkeit der Bestandteile in Lösung und in der festen Lackschicht gewährleistet sein.

Durch die Erfindung wird erreicht, daß man nunmehr Polyesteroberflächen, vorzugsweise Polyesterfolien, mit antistatischen Überzügen, enthaltend Bindemittel aus Celluloseestern oder Poly(meth)acrylaten bzw. deren Mischpolymerisaten, versehen kann, die besonders abriebfeste und thermisch widerstandsfähige Überzüge ergeben. Unter Polyesteroberflächen sollen solche verstanden werden aus Polyestern, Polycarbonaten oder Celluloseestern.

Die für die Bindemittel verwendeten Celluloseester sind die bekannten Celluloseacetate, Celluloseacetopropprionate, Celluloseacetobutyrate oder Mischungen der genannten Verbindungen. Als Poly(meth)acrylate oder deren Mischpolymerisate kommen Polyacrylsäureester, Polymethacrylsäureester oder Mischpolymerisate, die neben anderen Monomeren, wie Acrylnitril, Vinylacetat oder Styrol, Acrylsäureester und/oder Methacrylsäurester als Hauptbestandteile erhalten, in Frage.

Für die als Zusatz mit der Mischung aus Bindemittel und Antistatikum einzusetzende Komponente, die die antistatische Wirkung verstärkt, sind handelsübliche Weichmacher geeignet, wie solche auf Basis von Pentaerythritol, etwa Pentaerythritoltetrabenzoat (BENZOFLEX® der VELSICOL CHEMICAL CORP.) oder auf Basis von Adipinsäure und Butandiol (PALAMOLL® der BASF).

Es sind auch Vinylpolymere als Zusatz einsetzbar, wie Homopolymerisate des Vinylacetats mit niedrigem oder höherem Molekulargewicht (MOWILITH®, der HOECHST AG) oder Mischpolymerisate des Vinylacetats, etwa mit Crotonsäure. Ferner eignen sich als Zusatzkomponente Polyester wie lineares, gesättigtes, Hydroxylgruppen tragendes Polyesterharz (DYNAPOL® der DYNAMIT NOBEL).

Als Antistatikum können handelsübliche Produkte Verwendung finden. Sie sind bei Zimmertemperatur flüssig oder fest. Für Überzüge mit großer Härte werden jedoch Antistatika in festem Zustand bevorzugt. Solche Überzüge verwendet man besonders für die Beschichtung von Folien aus Polyethylenterephthalat.

Als einsetzbare, handelsübliche Antistatika werden genannt: Natriumsalze von Alkansulfonaten (STATEXAN® der BAYER AG), Stearamidopropyldimethyl-ß-hydroxyethylammoniumnitrat (CYASTAT® der CIBA GEIGY), Gemische der Mono-und Di-ester aus Phosphorsäure und Ethylenoxidaddukten von aliphatischen Alkoholen (GAFAC® der GAF), Ester aus o-Phosphorsäure und Lauryldiglykolether bzw. mit Polyglykol (HOSTAPHAT® der HOECHST AG), organische Phosphorsäuresalze (LEOMIN® der HOECHST AG), Dodecyltrimethylammoniumchlorid, gelöst in wässrigem Alkohol (ARQUAD® der ARMOUR HESS) und wässrigalkoholische Lösungen von quarternären Ammoniumverbindungen (ANTISTATIKUM (R)der KRAHN CHEMIE).

Die angeführten Produkte aus der Reihe der Antistatika und der erfindungsgemäßen nieder-oder hochmolekularen zusätzlichen Komponente stellen nur eine Auswahl dar. Die erfindungsgemäßen Möglichkeiten sollen dadurch nicht begrenzt werden.

Die erfindungsgemäßen Überzüge für Polyesteroberflächen können auch noch für andere Zwecke geeignete Substanzen enthalten, wie etwa Pigmente, Füllstoffe, vernetzende Chemikalien und haftvermitelnde Substanzen.

Die erfindungsgemäßen Überzüge finden vorzugsweise Verwendung auf Folien aus Polycarbonat, Celluloseestern bzw. generell aus Polyestern. Besonders bewährt haben sich Überzüge auf Folien aus Polyethylenterephthalat.

Die folgenden Beispiele sollen die Erfindung näher erläutern.

Die hierin verwendeten Antistatika und erfindungsgemäßen Zusätze sind folgender Aufstellung zu entnehmen.

Antistatikum                                              Kennzeichen

Natriumsalz eines $C_{12}$-$C_{20}$ Alkansulfonates              I

Stearamidopropyldimethyl-ß-hydroxyethyl-              II
ammoniumnitrat
50%ig in gleichen Teilen Isopropylalkohol
und Wasser gelöst.

Gemisch aus Mono- und Di-ester aus Phosphorsäure      III
und dem Ethylenoxidaddukt eines aliphatischen Alkoholes

Tertiärer Ester aus o-Phosphorsäure und Lauryldi-        IV
glykolether bzw. einem Polyglykol mit Ethylenoxideinheiten

Organisches Phosphonsäure-Salz                          V

Dodecyltrimethylammoniumchlorid
50%ig gelöst in 35 Teilen Isopropylalkohol und        VI
15 Teilen Wasser

Quarternäre Ammoniumverbindung                        VII
50%ig in Isopropylalkohol und Wasser

Zusatz                                                          Kennzeichen

Homopolymerisat aus Vinylacetat                                      A
Säurezahl 0,5 bis 1,0 nach DIN 53 402
Erweichungsbereich Ring- und Kugelmethode
nach DIN 1995  3.04 U 4 115 bis 135 °C.
Molekulargewicht etwa 130 000


Homopolymerisat aus Vinylacetat                                      B
Säurezahl 0,2 bis 1,0
Zersetzt sich vor dem Schmelzen
Molekulargewicht etwa 1 000 000


Copolymerisat aus Vinylacetat und Crotonsäure                       C
Säurezahl 35 bis 45
Erweichungsbereich 100 bis 120 °C
Molekulargewicht etwa 100 000


Weichmacher aus Pentaerythritol-tetrabenzoat                        D
Schmelzpunkt 99°C


Polyesterweichmacher aus Adipinsäure und                            E
Butandiol
Säurezahl maximal 2,5
Viskosität bei 20 °C nach DIN 53 015
6 000 bis 8 000 mPa s


Lineares, gesättigtes, Hydroxylgruppen enthal-                      F
tendes Polyesterharz
Säurezahl kleiner als 3
Schmelzviskosität bei 130 °C 23 bis 29 Pa s
Erweichungsbereich 60 bis 70 °C nach DIN 53 180


5

Beispiel 1

Es wurde eine 125 µm dicke Folie aus biaxial verstrecktem und thermofixiertem Polyethylenterephthalat als Unterlage verwendet. Sie war mit einer dünnen Haftschicht aus vernetzten Acrylaten ausgerüstet, die zwischen den VerstreckungsVorgängen aufgetragen worden waren, wie es die deutsche Offenlegungsschrift 20 34 407 entsprechend US-PS 4,391,767 lehrt.

Die Kunststoffolie wurde mit Schichten aus einem Celluloseacetropropionat mit 45 % Propionyl-, 2,5 % Acetyl-und 1,6 % Hydroxyl-Gruppen, einer Dichte von 1,25 $g/cm^3$ und einem Schmelzintervall von 190 bis 210 °C versehen.

Für den Überzug wurden Lösungen aus Aceton und Alkoholen vergossen und in drei Minuten in einem Trockenschrank mit Luftumwälzung bei 1100°C zu 1 bis 2 µm dicken Schichten getrocknet.

Als Maß für die Wirkung des jeweiligen erfindungsgemäßen Zusatzes wurde der Oberflächenwiderstand mit einer Federzungenelektrode bei 23 °C und ca. 50 % relativer Feuchte entsprechend DIN 53482 in Ohm ermittelt.

In Tabelle 1 enthalten alle angegebenen Mischungen mit und ohne Zusatz 5 % Antistatikum fest auf fest berechnet. Oberflächenwiderstände von Mischungen ohne Antistatikum bzw. mit Antistatikum, aber ohne den erfindungsgemäßen Zusatz, sind zum Vergleich angegeben.

## Tabelle 1

| Anti-statikum | Ohne Zusatz | A 30% | B 30% | C 30% | D 15% | E 15% |
|---|---|---|---|---|---|---|
| Ohne | $> 10^{13}$ | $> 10^{13}$ | $> 10^{13}$ | $> 10^{13}$ | $> 10^{13}$ | $> 10^{13}$ |
| I | $> 10^{13}$ | $7 \cdot 10^{9}$ | $1 \cdot 10^{10}$ | $5,5 \cdot 10^{10}$ | $1 \cdot 10^{11}$ | $1 \cdot 10^{10}$ |
| II | $> 10^{13}$ | $6 \cdot 10^{10}$ | $2 \cdot 10^{11}$ | $5,5 \cdot 10^{12}$ | $1 \cdot 10^{13}$ | $2,6 \cdot 10^{10}$ |
| III | $> 10^{13}$ | $6 \cdot 10^{10}$ | $2,4 \cdot 10^{9}$ | $1,6 \cdot 10^{10}$ | $6,5 \cdot 10^{9}$ | $4 \cdot 10^{10}$ |

Aus Tabelle 1 ist deutlich zu ersehen, daß der erfindungsgemäße Zusatz von 15 % Weichmacher oder 30 % der verschiedenem Vinylpolymeren zu Überzügen führt, die schon bei einem Gehalt von 5 % Antistatikum einen Oberflächenwiderstand von $10^{12}$ Ohm und kleiner haben. Ohne den erfindungsgemäßen Zusatz liegen die Oberflächenwiderstände über $10^{13}$ Ohm, das heißt es ergeben sich keine antistatisch wirksamen Schichten. Man muß etwa die doppelte Menge der entsprechenden Antistatika anwenden, um ohne den erfindungsgemäßen Zusatz zu vergleichbarer Antistatik zu kommen.

## Beispiel 2

Als Basis diente eine 100 $\mu$m dicke biaxial verstreckte und thermofixierte Folie aus Polyethylenterephthalat. Sie hatte keine Haftschicht.

Es wurde ein antistatischer Überzug erzeugt, der ohne Haftschicht fest auf der Unterlage verankert war. Er bestand aus einer Mischung von 40 Teilen des Celluloseacetopropionates aus Beispiel 1 und 60 Teilen des Polyesterharzes Dynapol LH 812 (F). Die 1-2$\mu$m dicken Überzüge wurden entsprechend den Angaben von Beispiel 1 erzeugt. Sie enthielten 5 % Antistatikum fest auf fest berechnet.

Tabelle 2 enthält die entsprechend den Angaben von Beispiel 1 gemessenen Widerstände, angegeben in Ohm.

## Tabelle 2

| Antistatikum | Ohne Zusatz | Mit Zusatz |
|:---:|:---:|:---:|
| Ohne | $>10^{13}$ | $>10^{13}$ |
| I | $>10^{13}$ | $2,2\cdot10^{9}$ |
| II | $>10^{13}$ | $7,0\cdot10^{9}$ |
| III | $>10^{13}$ | $9,0\cdot10^{10}$ |

## Beispiel 3

Es wurde verfahren wie in Beispiel 1 angegeben. Es wurden verschiedene Mengen an Antistatikum eingearbeitet.

Tabelle 3 enthält die Meßwerte für den Oberflächenwiderstand der Überzüge.

Tabelle 3

| Antistatikum | Anteil Antistatikum (%) | Anteil E (%) | Oberflächen- widerstand (Ohm) |
|---|---|---|---|
| IV | 0 | 0 | $> 10^{13}$ |
|  | 5 | 0 | $> 10^{13}$ |
|  | 8,2 | 0 | $> 10^{13}$ |
|  | 9,6 | 0 | $2,2 \cdot 10^{10}$ |
|  | 5,0 | 15 | $8,0 \cdot 10^{12}$ |
|  | 5,0 | 30 | $3,8 \cdot 10^{11}$ |
| VII | 5 | 0 | $> 10^{13}$ |
|  | 9,6 | 0 | $8,0 \cdot 10^{12}$ |
|  | 5 | 15 | $1,2 \cdot 10^{10}$ |
|  | 5 | 30 | $1,0 \cdot 10^{9}$ |

Beispiel 4

Eine 125 μm dicke Folie aus biaxial verstrecktem und thermofixiertem Polyethylenterephthalat ohne Haftschicht wurde mit Lösungen aus Aceton und Alkoholen beschichtet, die nach Trocknung von 3 Minuten bei 110 °C etwa 3 bis 4 μm dicke Schichten ergaben.

Als Bindemittel diente Polymethylmethacrylat mit einem mittleren Molekulargewicht von ca. 100 000 und einem Schmelzbereich von 205 bis 210 °C. Als erfindungsgemäßer Zusatz diente das Polyesterharz (F). Der Anteil Antistatika betrug in allen Kombinationen der Tabelle 4 10 % fest auf fest. Wie in den vorangehenden Beispielen beschrieben wurde der Oberflächenwiderstand gemessen.

8

Tabelle 4

| Antistatikum | Ohne Zusatz | F (20%) | F (40%) |
|---|---|---|---|
| I | $> 10^{13}$ | $3 \cdot 10^{12}$ | $1 \cdot 10^{10}$ |
| V | $> 10^{13}$ | $8,5 \cdot 10^{9}$ | $1 \cdot 10^{10}$ |
| VI | $> 10^{13}$ | $2,8 \cdot 10^{6}$ | $5 \cdot 10^{6}$ |

Die Überzüge hafteten auf der nicht vorbehandelten Polyesterfolie so gut, daß man mit einem fest angeklebten Klebeband selbt nach Einritzen dieser Schichten keine Anteile abziehen konnte.

Beispiel 5

Es wurde eine 100 μm dicke Folie aus biaxial verstrecktem und thermofixiertem Polyethylenterephthalat, wie in Beispiel 2 angegeben, beschichtet. Die andere Seite der Folie trug hier aber eine elektrophotographisch bebilderbare Schicht für die Flüssigtoner-Bebilderung.

Als Bindemittel für den antistatischen Überzug diente Polymethylmethacrylat mit einem Molekulargewicht von 30.000 bis 40.000 und einer Glasübergangstemperatur von 100 °C.

Der Gehalt Antistatikum betrug 7,5 % fest auf fest berechnet (Tabelle 5). Als Zusatz enthielt die Mischung 10 % des Polyesterharzes (F).

Tabelle 5

| Probe | Antistatikum | Oberflächenwiderstand (Ohm) |
|---|---|---|
| 0 | Ohne | $> 10^{13}$ |
| a | V | $4,2 \cdot 10^{11}$ |
| b | VI | $1,5 \cdot 10^{9}$ |

Bei der Bebilderung der Folie in einem elektrophotographischen Kopierer mit Flüssigentwicklung war die Benetzung des Toners auf der Probe b am besten und auf der Probe 0 am schlechtesten.

Beispiel 6

Eine 140 1μm dicke Folie aus Cellulosetriacetat wurde mit Schichten aus Celluloseacetobutyrat versehen. Das Celluloseacetobutyrat hatte 37 % Butyryl-, 13 % Acetyl-und 1,8 % Hydroxylgruppen und einen Schmelzbereich von 195 bis 205 °C.

Die Überzüge wurden aus Lösungen vergossen, die Aceton und Alkohole enthielten und sie wurden in drei Minuten bei 110 °C in einem Umlufttrockenschrank zu 1 bis 2 μm dicken Schichten getrocknet.

Folgende Tabelle 6 enthält die Ergebnisse für den Oberflächenwiderstand (Ohm) der Überzüge mit 5 % Antistatikum. Sie hafteten auf der Folie ausgezeichnet.

Tabelle 6

| Antistatikum | Ohne Zusatz | A (30%) | E (15%) |
|---|---|---|---|
| Ohne | $> 10^{13}$ | $> 10^{13}$ | $> 10^{13}$ |
| I | $> 10^{13}$ | $1,6 \cdot 10^{11}$ | $6,0 \cdot 10^{11}$ |
| IV | $> 10^{13}$ | $1,2 \cdot 10^{12}$ | $3,0 \cdot 10^{12}$ |

**Ansprüche**

1. Antistatischer Überzug für Polyesteroberflächen, bestehend aus einer Mischung im wesentlichen aus
   a) Celluloseestern oder aus Poly(meth)acrylaten bzw. deren Mischpolymerisaten und aus
   b) wenigstens einem Antistatikum, dadurch gekennzeichnet, daß der Überzug als Zusatz eine mit der Mischung verträgliche Komponente aus der Gruppe der Weichmacher, der Vinylpolymeren oder der Polyester enthält, wobei das Gewichtsverhältnis von Antistatikum zu Zusatz im Bereich von etwa 1:1 bis 1:15 liegt.

2. Überzug nach Anspruch 1, dadurch gekennzeichnet, daß das Gewichtsverhältnis von Antistatikum zu Zusatz im Bereich von etwa 1:2 bis 1:6 liegt.

3. Überzug nach Anspruch 1, dadurch gekennzeichnet, daß der Zusatz ein Weichmacher auf Basis von Pentaerythritol oder Adipinsäure und Butandiol ist.

4. Überzug nach Anspruch 1, dadurch gekennzeichnet, daß der Zusatz ein Homo-oder Mischpolymerisat des Vinylacetats ist.

5. Überzug nach Anspruch 1, dadurch gekennzeichnet, daß der Zusatz ein Polyesterharz ist.

6. Überzug nach Anspruch 1, dadurch gekennzeichnet, daß er auf einer Polyesterfolie aufgebracht ist.

7. Überzug nach Anspruch 6, dadurch gekennzeichnet, daß die Folie aus Polyethylentherephthalat ist.